# EUROPEAN PATENT APPLICATION

(11) **EP 1 928 189 A1**
(43) Date of publication of application: **04.06.2008**
(21) Application number: 06024962.0
(22) Date of filing: 01.12.2006
(51) Int. Cl.: H04Q 7/28

(54) **Signalling for push-to-translate-speech (PTTS) service**

(71) Applicant: Siemens Networks GmbH & Co. KG, 81541 München (DE)
(72) Inventor: The designation of the inventor has not yet been filed
(74) Representative: Maier, Daniel Oliver

(57) **Abstract**

A signalling method of a Push-To-Translate-Speech translation service comprising a block-wise speech transmission over a wireless network (3), from a first user terminal (1) in the source language to a second user terminal (2), or to a plurality of second user terminals in the target language, employing a Push-To-Talk (PTT) terminal (1, 2) with a PTT-key and a translation server (4).

## Description

The present invention relates to a signalling method of a Push-To-Translate-Speech (PTTS) translation service system. Such system, based on a Push-To-Talk (PTT) voice and multimedia communication service, comprises a block-wise speech transmission over a wireless network from a first user terminal in the source language to a second user terminal or to a plurality of second user terminals in at least one target language. More specifically, the present invention relates to a signalling method and an apparatus employed during the conversation phase and the translation session among a translation server and the connected user terminals.

Multilingual spoken language services are a growing branch. Telephone companies in the United States, Europe, and Japan now offer language translation services over the telephone, provided by human operators. The drive to automate information services, however, produces a growing need for automated multilingual speech processing, in which a translator server replaces the human operators.

Telephony automatic translation and interpretation services in real time are based on a network of different user terminals. These terminals cannot send the information data simultaneously. Once a user terminal has transmitted the data to be translated, it is necessary that the other terminals wait for the corresponding turn before speaking/transmitting, while the translator server outputs the translated message in the correct language. The employment of a Push-To-Talk method can make these services faster and more efficient.

Push-To-Talk (PTT) is a method of transmitting data on half-duplex communication lines, meaning that data can only be transmitted in one direction at any given moment. To control which person can speak and be heard at a certain terminal, PTT requires the person speaking to press a button at her/his terminal while talking and then release it after having finished to speak. In order to respond to the received speech, the listener will press the button at her/his terminal and will start to answer.

More recently, the PTT concept has been adopted by cellular-phone carriers as a way to instantaneously send transmissions to other user terminals of the system, emulating "walkie-talkie" communications on a mobile phone network. In this service, several predefined group users participate in one session. PTT over Cellular (PoC) service, offered by some mobile carriers, adds functionality for individual half-duplex transmissions to be sent to another party on the system without needing an existing connection to be already established.

Since the system is half-duplex, utilizing a single frequency, only one user terminal can transmit by PTT at a time and must ask for the floor, the permission to speak, by pressing the PTT button before talking. The other party is unable to transmit until the PTT button is un-keyed at the transmitting user terminal.

The application of a PTT method clearly improves the efficiency of an automatic translation service. However, an important aspect to be considered is not only the "human-to-human" (user-to-user) dialogue interpretation, but also the "human-to-machine" (user-to-server) dialogue interpretation. An incorrect dialoguing between the user and the server can lead to a slowing down of the automatic process with a possible interruption of the communication or, also, to a loss of data.

In US 2004/0122677 A1 "guiding messages" are sent to the user terminals during an automatic speech translation service. These messages basically instruct the user how to progress in the translation process. They notify the user, in fact, about the request of inputs, such as the telephone number or the language of the counterpart through telephone buttons.

In other cases, during the translation, the server simply sends to the user terminals a steady-state indication "translating". Such an indication, however, does not really inform the user about the translation progress in real time. This could cause a loss of data from one user terminal to the other if, for example, an overload situation is approaching and the user is not informed thereon.

Also, it should be taken into consideration, that the block-wise transmissions employed in an automatic translation service system are time shifted by the time lapse of the translation process receiving the first input in the source language and generating the first output in the target language. Moreover, the original and the translated data-blocks differ in length and duration, as governed by language characteristics. Without an appropriate signalling to the user terminals, these features can lead to a slowdown of the translation process, due for example to interruption of the communication or loss of data.

It is an object of the present invention to provide an improved signalling method of a Push-To-Translate-Speech translation service, which method in particular enhances the usefulness of the service and helps to avoid difficulties and undue delays in the translation process. Furthermore, it is an object of the invention to provide a corresponding apparatus of a PTTS service, which apparatus makes advantage of the improved method.

This object is solved by a method having the features described in claim 1 and an apparatus having the features described in claim 19.

To overcome the problem of leaving the users without proper indications of the status of the translation in real time and of avoiding loss of data, in the preferred embodiment of the present invention a translation service system with an improved signalling method during the conversation phase of the translation session, is described.

The accompanying drawings illustrate preferred embodiments of the invention and together with the description serve to explain the principles of the inventions.
Fig. 1 is a functional block diagram of an apparatus of the Push-To-Translate-Speech translation service;
Fig. 2 is a flow-chart diagram of a signalling method of the Push-To-Translate-Speech translation service;
Fig. 3 shows a timing diagram describing the signalling function of the storing status of the data-storing-means;
Fig. 4 shows a timing diagram describing the padding notification process;
Fig. 5 shows a timing diagram describing the function of reproducing the translated output to be sent to the first user terminal.

Reference is now made in detail to the present preferred embodiments of the invention illustrated in the accompanying drawings.
The invention supposes that the service and session establishment have been realised and the appropriate resources are available, such as PTT-enabled terminals, addressable translation server, etc... The present invention particularly covers signalling during the conversation phase of the translation session.

A block-wise speech transmission will be employed from a first user terminal in the source language to a second user terminal or to a plurality of second user terminals in the target language, by means of Push-To-talk (PTT) terminals having a PTT-key button and a translation server. After the PTT-key button has been pressed at the first user terminal, the speech can begin. The translation server receives the input form the first user terminal in the source language, translates sentence by sentence, or consecutive sentences, and outputs the translation to the second user terminal in the target language. In the following, the translation direction from the first to the second user terminal is considered. For the reverse direction the same functions with the corresponding problems and solutions will occur.

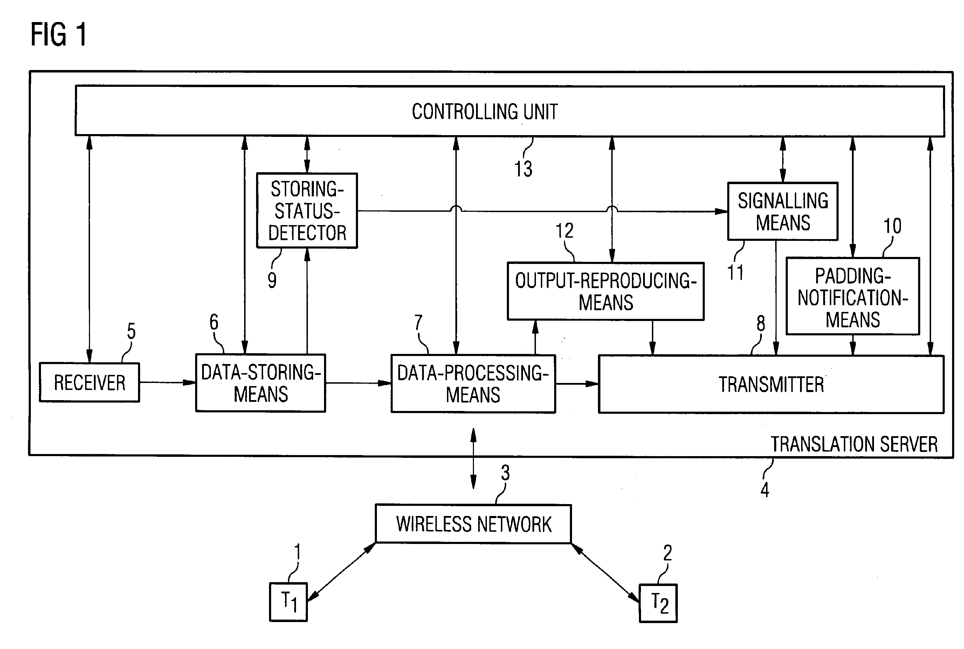

In figure 1 a functional block-diagram of an apparatus of the PTTS translation service system is shown. A first user terminal T₁ 1 is connected, over a wireless network 3, to a translation server 4 and, through this server, to a second user terminal T₂ 2. The translation server comprises receiver 5 to receive, by means of a receiving antenna, the data sent by the terminals. The output of the receiver is connected to the input of a data-storing-means 6. Here the data are temporarily held, waiting to be sent to the input of a data-processing-means 7 where they will be processed. The output of the data-processing-means is connected to the input of a transmitter 8 which will send the data to the terminals by means of a transmitting antenna. A control unit 13, comprised in the translation server, is employed for an overall control of the means present in the system.

The translation server also includes: storing-status-detector 9 whose input is connected to the data-storing-means in order to detect in real time the storing status of the data-storing-means; padding-notification-means 10 whose input is connected to the control unit informing about the PTT-key button activation at the terminals and whose output is connected to the transmitter in order to inform the second user terminal via padding notification that the translation is going to start; signalling means 11 whose input is connected to the storing-status-detector and whose output is connected to the transmitter in order to signal back to the first user terminal the storing status of the data-storing-means in real time; and output-reproducing-means 12 whose input is connected to the data-processing-means and whose output is connected to the transmitter in order to generate and send to the first user terminal a reproduction of the translated output in the target language.

In the preferred embodiment, the signalling method of a PTTS translation service comprises three separate and independent functions:
(a) signalling back to the first user terminal in real time the storing status of the data-storing-means holding the data waiting to be processed;
(b) padding a notification to the second user terminal in the target language to inform that the translation is going to start; and
(c) providing to the first user terminal a reproduction of the translated output in the target language.

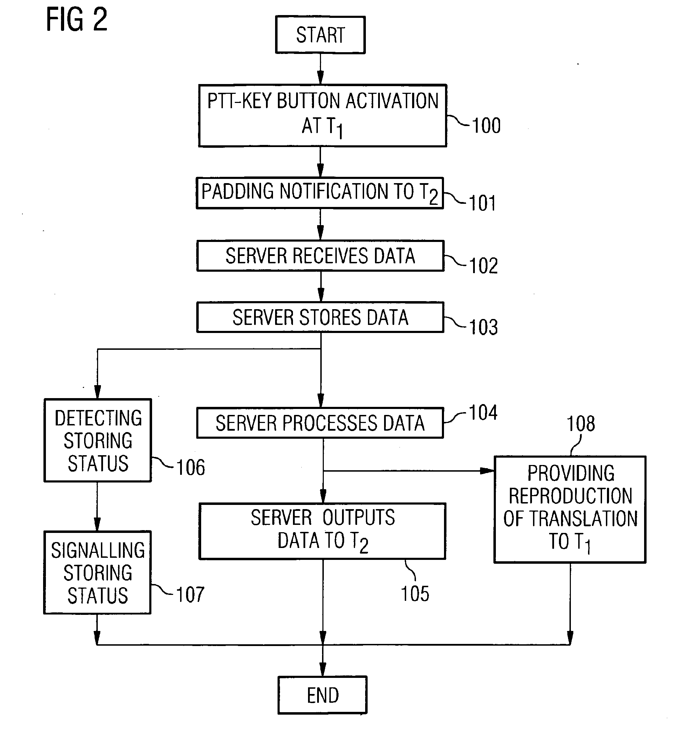

In figure 2 a flow-chart diagram describes the signalling method from the translation server to the user terminals in a PTTS service system. At step 100 the PTT-key button has been activated at the first user terminal. The padding-notification-means then provides to the second user terminal a padding notification in the target language, informing that the translation is going to start (step 101). At step 102, the translation server receives the input data from the first user terminal and stores them in the data-storing-means (step 103). After the translation server has started storing data received from the first user terminal, a storing-status-detector begins to detect the storing status of the data-storing-means (step 106) and such a storing status is transmitted to the first user terminal in real time by a signalling means (step 107). At step 104 the translation process starts and develops. During this process, the stored data are transferred from the data-storing-means to the data-processing-means and are translated from the source to the target language. Finally, the translation server outputs the processed data sending them to the second user terminal (step 105). Furthermore, a reproduction of the translated output is transmitted to the first user terminal in the target language (step 108).

In the following, the three independent functions (a) through (c), as mentioned above, are described in more detail.
(a) The translation server signals the storing status of the data-storing-means to the first user terminal
During the automatic translation service, at each user terminal the speed and/or volume and/or pitch of speech can be altered. The target language may be, for example, much more verbose than the source language and the user starting the translation process may not be aware of that. Therefore, if the speed of the speech is too high, an overload situation may occur with a consequent interruption in communication between the user terminal and the translation server. This is explained considering that, once the data are received by the translation server, they are allocated in the data-storing-means waiting to be processed by the data-processing-means.
In a preferred embodiment, the data-storing-means is a circular buffer having a storage space for the data of whatever size is desired and feasible. The term "circular" refers to the rotation through the buffer of the positions where the next data will be read and written. When moving through the buffer, the writer moves forward one step each time it writes, and when it passes the end of the buffer it starts again from the beginning. The reader moves through the buffer at the same way. As long as the reader is as fast as or faster than the writer, the buffer acts as a queue of the next data to be processed. If the writer is faster than the reader, the buffer can be completely filled up and an overload situation may occur with a possible consequent overwriting of data which are not yet read by the system.
To avoid this situation, the storing status of the data in the data-storing-means is signalled back to the first user terminal during the translation process. The detection of the storing status of the buffer is performed in real time by employing a read pointer and a write pointer. The data are written to the memory buffer at memory locations indicated by the write pointer while advancing the write pointer. The data are read from the memory buffer at memory locations indicated by the read pointer while advancing the read pointer. If the read pointer and write pointer point to the same spot in the buffer that might mean that there is no data in the buffer (nothing has yet been written to the spot that must be read) or that the buffer is full (the spot to be written is already occupied by a data not yet read). Since these two situations should be distinguished from each other and since the "buffer-full" condition must be avoided, the buffer is considered full when only one element is left between the write pointer and the read pointer.

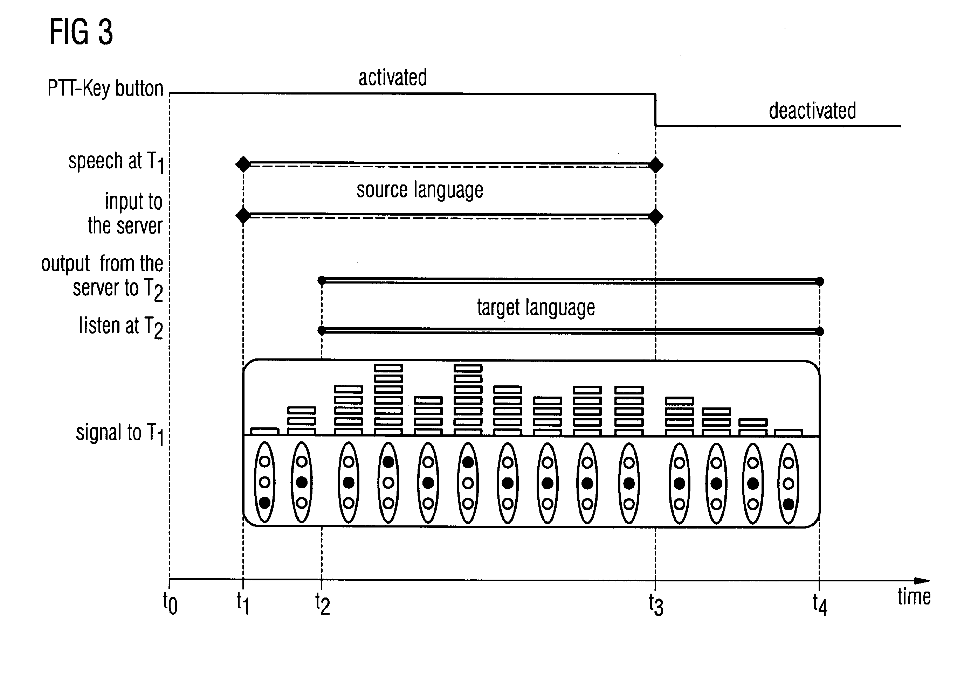

Figure 3 shows a timing diagram describing the signalling function of the storing status of the data in the buffer during the period of time from the beginning of data input coming from the first user terminal (at time t₁) till the end of translation output to the second user terminal (at time t₄). Due to the difference in language characteristics between the source and the target language, the lapse of time between the first input of data in the translation server from the first user terminal (at time t₁) and the first output of data from the translation server to the second user terminal (at time t₂) is different from that between the end of the speech from the first user terminal (at time t₃) and the completion of output from the translation server (at time t₄). Also, as an example of the optical indication of the storing status activity, the use of "bar graph" and "traffic light" signalling is shown in the figure.
In the preferred embodiment, the storing status of the data-storing-means can be provided in different ways by means of a signalling means which comprises an audible and/or an optical indication generator:
- as an audible indication;
- as an optical indication by employing "bar graph" signalling, similar to a volume indicator, in coloured segments or black and white; or
- as an optical indication by employing a "traffic light" signalling, displaying green, yellow, and red.
The indication of the storing status scales along different status indications, wherein a low-status indication notifies waiting for input, a mid-status indication notifies working in progress, a high-status indication notifies overload/discarding, meaning that no more data can be stored. The escalation steps are shown in the following table.

| **activity** | | **audible** | **optical display** |
|---|---|---|---|
| 1 | no, wait for input | humming beat | blinking green |
| 2 | low | humming | green |
| 3 | medium | buzzing | yellow |
| 4 | high | hissing | red |
| 5 | overload, discharging | hissing beat | blinking red |

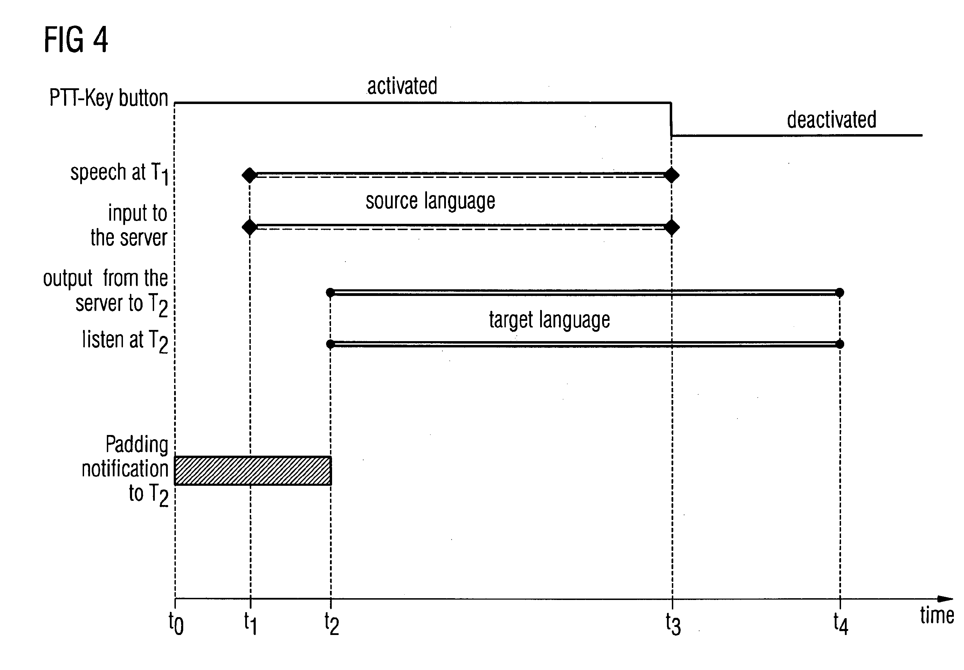

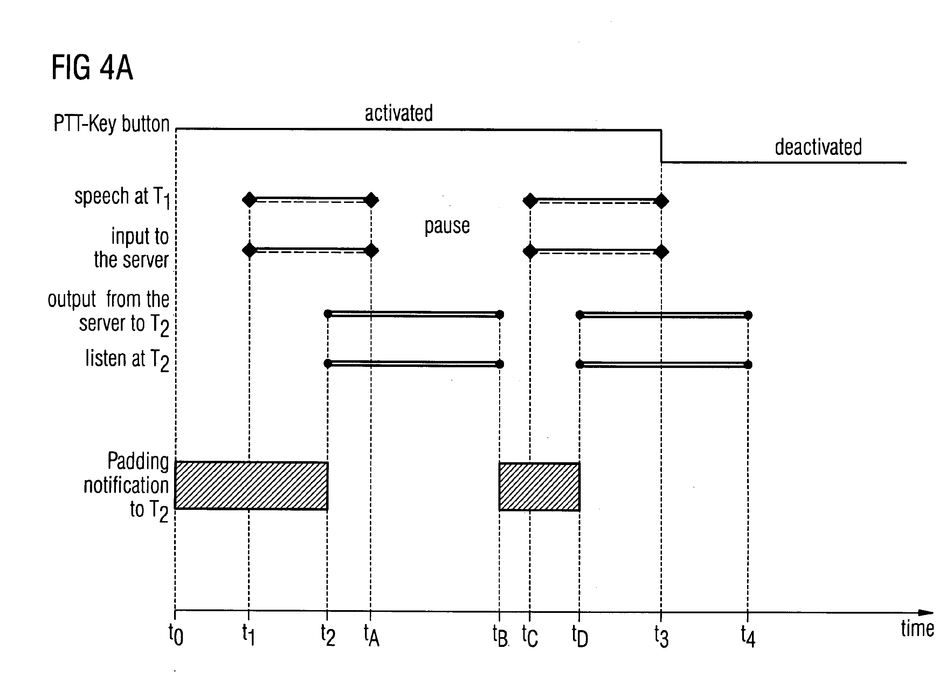

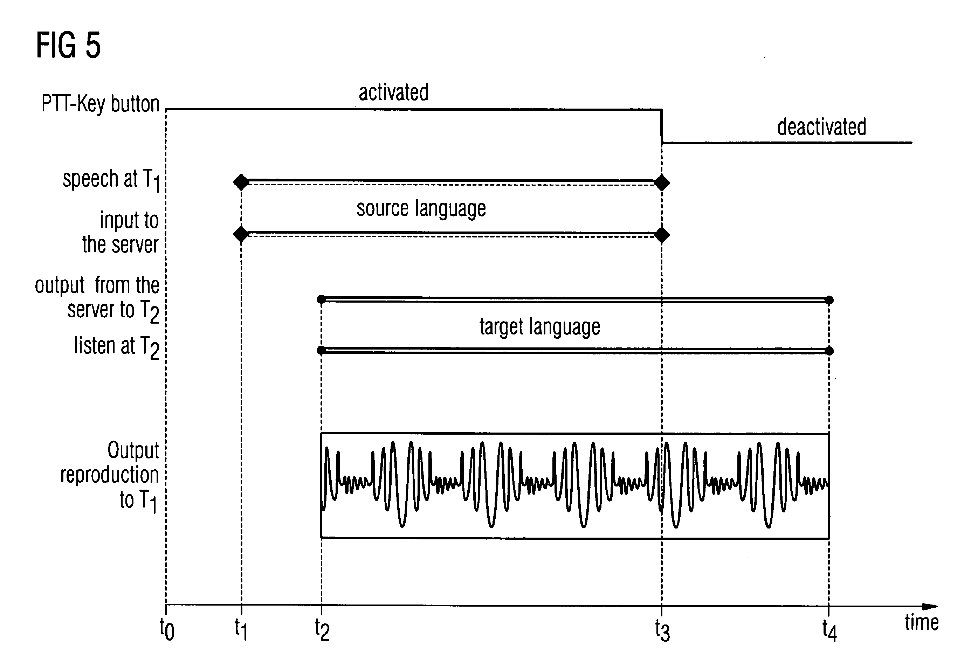

In order to provide the dynamic storing status of data in the buffer, different audible or optical indications can be employed with the same functions as described in the table.
In a further embodiment, the dynamic processing status of the data in the translation server can be signalled back to the first user terminal. Similarly to the activity of the data-storing-means, also the activity of the data-processing-means can be provided via audible or optical indications and scaled on different activity status. A very low or null processing activity will describe a situation in which few or no data have been received by the translation server and stored in the buffer. On the other hand, a very high processing activity will describe a situation in which a lot of data have been received by the translation server, are stored in the buffer and are sent to the data-processing-means with the risk of achieving a data overload.
Based on this signalling function, the audible or the optical indication notifies the first user terminal that the translation server is processing the data input or is discarding it. This is an important aspect of the present invention. In fact, by analysing the dynamic storing status of the data in the buffer, the first user may decide, depending on the situation, to adjust the output speed by speeding up or slowing down the speech, thereby avoiding the approaching of an overload situation or reducing the waiting time for a translated message at the second user terminal, respectively.
For signalling between the translation server and the first user terminal, two options are available:
- a tone signal generated by the signalling means, indicating the storing status by beat, volume, pitch;
- a protocol transmission of dynamic values to be received and converted into display or audible indication, by a specific translation client application. This application would be downloaded to either terminal during session establishment, in case it will not be available in the terminal.
As an improvement of the preferred embodiment, when the PTTS translation service involves more than one second user terminal and more than one target language, the translation server comprises more than one data-storing-means, and more than one data-processing-means and the processing activity will depend on the target language characteristics. Accordingly, the translation process from the source language to certain target languages may require a longer time in comparison to other target languages. Therefore, if the first user terminal refers to the storing status of the buffer involving the quickest translation process, it could tend to speed up the speech by increasing the input data and it would cause an overload situation in the buffer involving the slowest translation process. For this reason, when more than one target language is involved, the storing status of the data-storing-means involving data which are waiting to be translated in the language producing the most time-consuming process activity is signalled back to the first user terminal by the translation server.
(b) The translation server provides padding notification to the second user terminal to inform that the translation is going to start
Figure 4 shows a timing diagram describing the padding notification process during the period between the activation of the PTT-key button at the first user terminal (at time t₀) and the step of starting output of the translation server to the second user terminal (at time t₂).
During the start-up period, beginning when the PTT-key button is pressed at the first user terminal (time t₀) and ending when the translation starts to be outputted by the transmitter in the target language (time t₂), the second user terminal would be reached only by an idle noise.
In a preferred embodiment, this lapse of time is filled with a padding notification generated by a padding-notification-means to inform the second user terminal that the translation is starting. The padding notification is provided in three possible ways or with any feasible combination of the same:
- an audible announcement in the target language, wherein, for example, the phrase "please hold the line, translation is starting" recurs, or
- an audible tone in the form of a stand-by tone or call hold music, and /or
- an optical display notification in the target language in which the text part notification is combined with a "wait, system is working" indication in that language.
   At time t₂ the padding is terminated and it is replaced by the steady-state translation output along the steady-state "working" indications.
As an improvement of the preferred embodiment, the Push-To-Translate-Speech translation service involves more than one second user and more than one target language (multi party / group mode). In such a situation, since different languages have different characteristics in terms of sentences construction, the padding announcement duration and then the output start time t₂ will be language specific.
In a further improvement of the preferred embodiment, additional padding notifications can be sent to the second user terminal if during the speech one or more pauses are made at the first user terminal, while the PTT-key button is still activated. Referring to figure 4-a, the speech is stopped at the first user terminal at time t_{A} and is resumed at time t_{C} without deactivating the PTT-key button. In this way, a first input data, between t₁ and t_{A}, and a second input data, between t_{C} and t₃ are sent from the first user terminal to the translation server. Consequently, a first output data, between t₂ and t_{B}, and a second output data, between t_{D} and t₄ are sent from the translation server to the second user terminal. During the pause (t_{A}-t_{C}), no input data are sent from the first user terminal to the translation server. If in this lapse of time the data-storing-means is completely emptied, after the translation server has completed the translation of the first input data (at time t_{B}), a padding notification is sent to the second user terminal in order to inform that new translated data are going to be send. This padding notification ends when the translation server starts to output the translation of the second input data to the second user terminal (at time t_{D}).
(c) The translation server provides to the first user terminal a reproduction of the translated output in the target language
In the preferred embodiment, during the period of time from the beginning till the end of the translation output to the second user terminal (t₂-t₄), the translation server provides to the first user terminal a reproduction of the translated output in the target language. In figure 5 is described a timing diagram during the conversation and translation session, wherein the reproduction of the translated output is shown as voice amplitude.

The reproduction is generated by an output-reproducing-means, connected to the data-processing-means and to the transmitter. In order to suppress signal noise and/or sounds like echo and to make the reproduced message more comprehensible at the first user terminal, the output-reproducing-means comprises an electronic circuit including noise filters and echo cancellers.

By receiving the reproduction of the translated output in the target language, the running activity of the translation server can be shown at the first user terminal. Instead of receiving a steady-state indication "translating", there is the possibility to effectively ascertain, at the first user terminal, that the translator server is working and hence that it is translating the data from the source to the target language. In this way, if there are technical problems causing an incorrect work of the translation server, i.e. no translation is outputted, the first user terminal can promptly intervene trying to solve the problems by contacting, for example, the technical assistance.

The reproduction of the translated output can be provided in the form of an audible message or an optical text; moreover it can be sent to the first user terminal together with the padding notification in order to notify the first user terminal about the complete information received at the second user terminal, i.e. the notification of the translation start and the processed data during the translation process.

In a further embodiment, if the reproduction of the translated output is an audible message, it complements the optical indication or it can replace the audible mid-status indication of the storing status of the data-storing-means. On the other hand, if the reproduction of the translated output is an optical text, it complements the audible indication or it can replace the optical mid-status indication of the storing status of the data-storing-means.

The first user terminal has the option to initiate the function of providing the reproduction of the translated output in the target language. However, as an improvement of the preferred embodiment, when the PTTS translation service involves more than one second user terminal and more than one target language, the reproduced message is provided in one of the available languages or as an overlay of several/all languages, or as an artificial nonsense sound, generated by the translation server, by randomly concatenating phonemes.

Further advantages of the present invention consist in accurate and unambiguous signalling indications for all user terminals of PTTS service, when speaking or listening, in covering two-party, multi-party, and multi-language operation of PTTS service, and in having the possibility to work with standard commercial off-the-shelf Push-To-Talk clients/terminals. Moreover the apparatus and the method of the present invention are useful for proprietary differentiation and/or stepwise upgrade of translation service. Finally, the reproduction of the translated output sent to the first user terminal and the storing status signalling function can be considered complementary, as they are indicating different topics and different aims. In fact, while the first application provides confidence to the user terminal regarding the working process of the system, the second one influences basically the speech speed output.

The invention is not restricted to the above described specific aspects and embodiments but can also be carried out in numerous modifications and combinations thereof.

## Claims

1. A signalling method of a Push-To-Translate-Speech translation service comprising a block-wise speech transmission over a wireless network (3), from a first user terminal (1) in the source language to a second user terminal (2), or to a plurality of second user terminals in the at least one target language, employing a Push-To-Talk (PTT) terminal (1, 2) with a PTT-key and a translation server (4), the method comprising:
- activation of the PTT-key button at the first user terminal (1);
- padding a notification to the second user terminal (2) in the target language to inform that the translation is going to start;
- receiving data in the translation server (4) coming from the first user terminal (1) in the source language;
- storing the received data in a data-storing-means (6) comprised in the translation server (4);
- detecting a storing status of the data-storing-means (6) holding data waiting to be processed;
- signalling back to the first user terminal (1) in real time the storing status of the data-storing-means (6);
- processing the stored data by translating them from the source language to the target language;
- sending the processed data to the second user terminal (2) in the target language; and
- providing to the first user terminal (1) a reproduction of the translated output in the target language.

2. The method of claim 1, wherein the padding function is provided during a start-up time, beginning when the PTT-key of the first user terminal (1) is activated and ending when the translation server (4) starts outputting the translation to the second user terminal (2).

3. The method of one of the preceding claims, wherein the padding notification to the second user terminal (2) comprises an audible announcement provided in the target language.

4. The method of one of the preceding claims, wherein the padding notification to the second user terminal (2) comprises an audible tone provided as a stand-by tone or call-hold music.

5. The method of one of the preceding claims, wherein the padding notification to the second user terminal (2) comprises an optical display provided in the target language and wherein the text part notification is combined with a "wait, system is working" indication in that language.

6. The method of one of the preceding claims, wherein a steady-state translation output is provided at the end of, and replacing the padding function.

7. The method of one of the preceding claims, wherein, if the speech is paused at the first user terminal (1) while the PTT-key button is still activated, a padding notification is provided to the second user terminal (2) during the period between the translation server has completed the translation output of the first input data coming from the first user terminal (1) before the pause and has started the translation output of the second input data coming from the first user terminal (1) after the pause.

8. The method of one of the preceding claims, wherein the signalling function of the storing status of the data-storing-means (6) is provided from the beginning of data input coming from the first user terminal (1) till the end of translation output to the second user terminal (2).

9. The method of one of the preceding claims, wherein the storing status of the data-storing-means (6) is provided to the first user terminal (1) in the form of an audible indication and/or an optical indication, wherein the optical indication is displayed as a "bar graph" signalling or a "traffic light" signalling.

10. The method of one of the preceding claims, wherein an indication of the storing status of the data-storing-means (6) scales along different status indications, wherein a low-status indication notifies waiting for input, a mid-status indication notifies working in progress, a high-status indication notifies overload/discarding, meaning that no more data can be stored.

11. The method of one of the preceding claims, wherein the Push-To-Translate-Speech translation service involves more than one second user terminal (2) and more than one target language, wherein the processing activity depends on the target language characteristics and, wherein the storing status of the data-storing-means (6) involving data which are waiting to be translated in the language producing the most time-consuming process activity is signalled back to the first user terminal (1) by the translation server (4).

12. The method of one of the preceding claims, wherein the reproduction of the translated output sent to the first user terminal (1) in the target language is provided from the beginning till the end of translation output to the second user terminal (2).

13. The method of one of the preceding claims, wherein the reproduction of the translated output sent to the first user terminal (1) in the target language is provided in the form of an audible message or an optical text.

14. The method of one of the preceding claims, wherein the function of providing the reproduction of the translated output in the target language is initiated by the first user terminal (1).

15. The method of one of the preceding claims wherein, the reproduction of the translated output in the target language is sent to the first user terminal (1) together with the padding notification.

16. The method of one of the preceding claims, wherein, if the reproduction of the translated output sent to the first user terminal (1) in the target language is an audible message, it complements the optical indication or replaces the audible mid-status indication of the storing status of the data-storing-means (6).

17. The method of one of the preceding claims, wherein, if the reproduction of the translated output sent to the first user terminal (1) in the target language is an optical text, it complements the audible indication or replaces the optical mid-status indication of the storing status of the data-storing-means (6).

18. The method of one of the claims 11 to 17, wherein, if the reproduction of the translated output sent to the first user terminal (1) is an audible message, it is provided in one of the available languages, or as an overlay of several/all languages, or as an artificial nonsense sound, generated by randomly concatenating phonemes.

19. An apparatus of a Push-To-Translate-Speech translation service comprising a block-wise speech transmission, from a first user terminal (1) in the source language to a second user terminal (2), or to a plurality of second user terminals in the at least one target language, comprising a Push-To-Talk (PTT) terminal (1, 2) with a PTT-key button, for transmitting and receiving data information, a translation server (4), for translating sentence by sentence, or consecutive sentences, in one direction at a time and connected to the terminals over a wireless network (3), comprising:
receiver (5) to receive the data coming from the user terminals (1, 2);
data-storing-means (6) connected to the receiver (5) to hold the received data waiting to be processed;
data-processing-means (7) connected to the data-storing-means (6) to process the stored data by translating them from the source language to the target language;
transmitter (8) connected to the data-processing-means (7) to send the data to the user terminals (1, 2);
storing-status-detector (9) connected to the data-storing-means (6) to detect in real time the storing status of the data-storing-means (6);
padding-notification-means (10) connected to the transmitter (8) to inform the second user terminal (2) via padding notification that the translation is going to start;
signalling means (11) connected to the storing-status-detector (9) and to the transmitter (8) to signal back to the first user terminal (1) the storing status of the data-storing-means (6) in real time;
output-reproducing-means (12) connected to the data-processing-means (7) and to the transmitter (8) to generate a reproduction of the translated output to be transmitted to the first user terminal (1) in the target language; and
controlling unit (13) connected to all the means to perform an overall control of the means.

20. The apparatus of claim 19, wherein the data-storing-means (6) comprises a dynamic circular buffer which temporarily holds input data waiting for the processing step.

21. The apparatus of claims 19 and 20, wherein the storing-status-detector (9) comprises a read pointer and a write pointer indicating the memory status of the buffer.

22. The apparatus of one of the claims 19 to 21, wherein the signalling means (11) comprises an audible and optical indication generator.

23. The apparatus of one of the claims 19 to 22, wherein the output-reproducing-means (12) comprises noise filters and echo cancellers to make the reproduced message more comprehensible at the first user terminal (1).

24. The apparatus of one of the claims 19 to 23, wherein the Push-To-Translate-Speech translation service involves more than one second user terminal (2) and more than one target language, wherein the translation server (4) comprises more than one data-storing-means (6), and more than one data-processing-means (7).
